# EUROPEAN PATENT SPECIFICATION

(11) **EP 0 404 557 B1**
(45) Date of publication and mention of the grant of the patent: **10.08.1994**
(21) Application number: 90306771.8
(22) Date of filing: 20.06.1990
(51) Int. Cl.: B29C 49/08, B29C 57/08, F16L 47/06, B29L 23/22

(54) **Pipes with integral sockets**
Rohre mit integrierten Ansätzen
Tuyaux à manchons intégrés

(30) Priority: 21.06.1989 AU 4854/89
(43) Date of publication of application: 27.12.1990
(73) Proprietor: VINIDEX TUBEMAKERS PTY. LTD., Gordon, NSW 2072 (AU); UPONOR N.V., Philipsburg Sint Maarten (AN)
(72) Inventor: Macovaz, George, Cherrybrook, NSW 2072 (AU); Chapman, Peter Glanville, Greenwich NWS 2065 (AU); Jarvenkyla, Jyri J., FI-15780 Hollola (FI)
(74) Representative: Tillbrook, Christopher John

(56) References cited:
- EP-A- 0 163 336
- DE-A- 2 742 969
- FR-A- 2 184 857
- FR-A- 2 462 254
- US-A- 3 849 530

## Description

This invention relates to pipes of plastics material having molecular orientation, and in particular to the manufacture of oriented plastics pipes with integrally formed sockets.

It is well established that molecular orientation of plastics can provide enhanced mechanical properties. Orientation is achieved by drawing or stretching the material under appropriate conditions of temperature. A number of methods have been proposed whereby this principle is applied to plastic pipes, in particular in order to enhance the burst strength under internal pressure by circumferential drawing.

United Kingdom Patent 1,382,580 describes the production of circumferentially oriented foamed PVC pipes by the expansion of a tubular feedstock in a cylindrical mould.

A difficulty arises in such methods in the provision of a socket for the purpose of jointing of pipes together. Whilst there are many couplers and separate joining devices that might suffice for this purpose, the preferred system provides an integral enlarged bell on one end of the pipe, into which the other end of spigot may be inserted, with an appropriate sealing system, such as adhesive or rubber gasket. It is generally considered necessary that the socket section of such pipes should be strengthened in relation to the body, because of the increased diameter and hydrostatic stresses, and to cope with the variety of other loads to which the socket section may be subjected. A common procedure is to thicken the wall of the socket with respect to the wall of the pipe, proportionately to the diameters.

United Kingdom Patent 1,432,539 describes the production of an enlarged diameter socket portion by expansion of the feedstock into a female mould in such a way as to produce circumferential orientation. This method is unsatisfactory as a consequence of the reduced wall thickness of the socket portion, and subsequent patent applications by the same applicant have described alternative techniques. In Australian Patent Application 29086/77 the socket portion is formed from a portion with increased wall thickness, while in Australian Patent Application 29088/77 a sleeve is placed over the socket portion to counteract the loss of wall thickness.

The prior art proposals are cumbersome and not conducive to efficient manufacture. Feedstock thickening causes loss of dimensional control and requires exacting control of cutting of the extrusion to ensure correct positioning of the thickened section. Sleeving requires the production and fitting of the sleeve by a secondary process.

A further problem arises with oriented pipes if it is desired to provide fittings such as bend and tees with joints secured to the pipe to support axial thrust. Such devices can be utilised with un-oriented plastic pipes, as the axial strength of the pipe can accommodate the service loadings. For oriented pipes, axial strength should also desirably be increased by introducing axial orientation.

In the method described in U.S. Patent 4,499,045, the method of U.K. 1,382,580 is modified by the use of a sleeve which moves progressively along the feedstock controlling its expansion. The friction between this sleeve and the feedstock procuces longitudinal drawing of the tube, resulting in a biaxially oriented pipe. The method there described suffers from a lack of positive control over the degree of axial drawing of the feedstock, and offers no solution to the problem of providing a satisfactory socket by an economical process.

It is the purpose of the present invention to provide a method of manufacturing an oriented plastic pipe having on one end an integral socket with the necessary enhanced strength and wall thickness, without the need to pre- thicken the feedstock at the socket section. The invention is characterised by the use of controlled axial drawing of the feedstock, such that a differential axial draw ratio is applied to the socket and the body of the pipe to produce the desired relative thickness and properties.

The present invention provides a circumferentially or biaxially oriented plastics pipe comprising a body with an integral socket at one end thereof, with the socket having a wall of lesser axial draw than the body of the pipe. The invention also provides a method of forming such a pipe, comprising:
(a) heating a feedstock tube to a desired orientation temperature;
(b) forming a socket by circumferential drawing of a portion of the feedstock tube with a first degree of axial draw; and
(c) forming the body of the pipe by circumferential drawing of the feedstock tube with a second degree of axial draw,
wherein said first degree of axial draw is less than said second degree of axial draw.

As used herein, the term "axial draw" refers to elongation relative to the length which would be achieved by free-end circumferential drawing. In free-end circumferential drawing, the ends of the feedstock are not axially restrained, and material is drawn from the length and wall thickness resulting in a pipe having the length and wall thickness reduced by a factor of which is substantially equal to the square root of the ratio increase in diameter. By contrast, in fixed-end circumferential drawing the length remains constant and the wall thickness is reduced by a factor equal to the increase in diameter. Thus, fixed-end drawing results in a thinner wall and positive axial draw compared to free-end drawing, with axial molecular orientation of the plastics material also resulting when the drawing is conducted at an appropriate orientation temperature.

In one form of the invention, the socket may have zero axial draw, whilst the socket body of the pipe has some positive axial draw. In another form, the socket may have some positive axial draw, while the body of the pipe has a larger positive draw ratio. In a further form the socket may have a negative axial draw or compression, whilst the body of the pipe some positive draw.

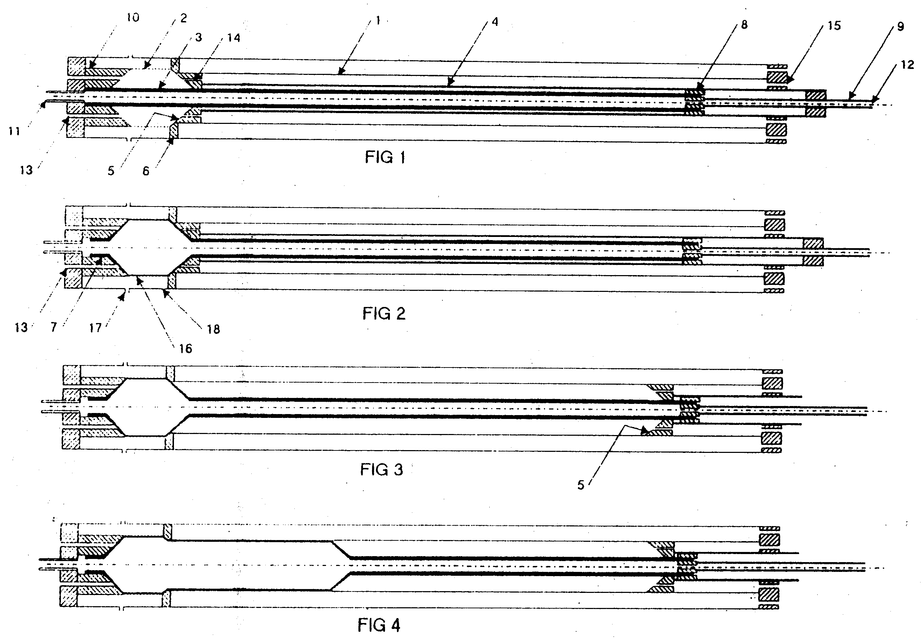

Preferably, the socket wall has circumferential orientation and the body has biaxial orientation. A process by which such differential axial draw combined with circumferential draw may be achieved is illustrated in Figure 1. A mould 1 has internal diameter sensibly equal to the final external diameter desired for the finished pipe. The end or socket section 2 of the mould is shaped essentially to the external configuration desired for the socket of the pipe, optionally with a groove (not shown) for formation of a groove in the socket of the pipe to contain an elastomeric seal. The socket section is constructed such that it may be opened laterally or axially to enable removal of the finished pipe.

A feedstock tube 3, which may be preheated partly or fully to the desired orientation temperature, is supported and enclosed by a sleeve or other support device 4, and introduced into the mould. Affixed to the end of the sleeve is a conical flange 5, close fitting and able to slide within the mould. The sleeve is moved initially to position the flange adjacent to the back of the socket section 6 of the mould as in Fig. 1. The end of the feedstock is clamped in a chuck 8 attached to rod 9, by which means the feedstock is moved within the sleeve to engage in endcap 10 having a close fit around the external diameter of the feedstock.

Fluid at an appropriate temperature is circulated within and without the feedstock 3 via ports 11, 12, 13, 14, 15 to bring the feedstock to a consistent and uniform temperature required for properly controlled drawing of the material. The pressure applied to the fluid via port 11 is then increased to that required to effect drawing or stretching of the material, which expands into the socket section of the mould as in Fig. 2, expelling heating fluid via ports 13, 14, 16 and 17. During this process material is pulled from the endcap 10 and sleeve 4 without restraint, so that the material of the socket of the pipe is not drawn in the axial direction. Optionally, the end 7 of the feedstock may be gripped in a chuck and tension applied to the feedstock via chuck 8 and rod 9 to produce any desired degree of axial draw in the socket. Optionally again compression may be applied to the ends of the feestock to produce negative draw and additional thickening of the socket.

Elastomeric seals, of self sealing or hydraulically actuated type, may be incorporated in the sleeve 4 and endcap 10 to aid in expansion of the socket.

On completion of expansion of the socket cold fluid is introduced via port 17 to the cooling jacket 18 around the mould socket section to fix or freeze the oriented material of the pipe socket. The pressure within the feedstock is then reduced to allow relaxation of the feedstock body section within the sleeve. Sleeve 4 may be partially withdrawn during this process, or fully withdrawn as shown in Fig. 3. The pressure is then increased via port 11 to expand the body of the feedstock as shown in Fig. 4, such expansion commencing naturally from the already expanded socket section and moving towards the other end. The tension force applied to the feedstock via rod 9 by means of the chuck 8 prevents reduction in length of the feedstock during the circumferential expansion, thus resulting in a thinner wall and positive axial draw.

On completion of expansion of the pipe cold fluid is introduced via ports 11, 12 to fix the orientation, and the chucks then released and the mould opened at endcap 10 and socket section 2 to enable the pipe to be removed. The ends of the pipe are trimmed appropriately to form the finished product.

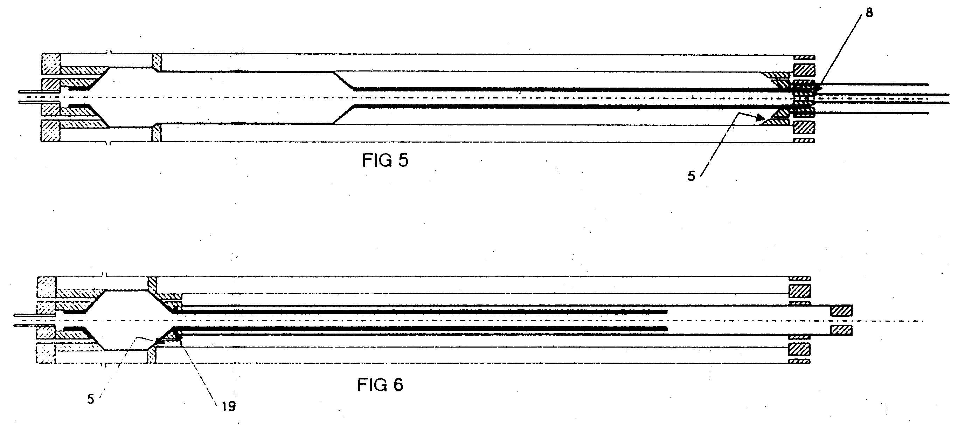

In one variation of the process, shown in Fig. 5, additional tension is applied to the feedstock by means of chuck 8 to give a desired amount of additional axial draw. This additional draw may be applied before or during the circumferential expansion.

In another variation of the process shown in Fig. 6, friction between the feedstock 3 and sleeve supporting device 4 equipped with a seal 19 may be used to effect and control axial draw in a manner similar to that described in the abovementioned U.S. Patent 4,499,045, by maintaining pressure within the feedstock during withdrawal of the sleeve. In this procedure, also the rod 9 and chuck 8 may be eliminated, and movement of the sleeve 4 and flange 5 axially within the mould prior to or during expansion of the socket may be used to obtain any desired axial draw of the socket.

## Claims

1. A circumferentially or biaxially oriented plastics pipe comprising a body with an integral socket at one end thereof, with the socket having a wall of lesser axial draw i.e. the elongation relative to the length which would be achieved by free-end circumferential drawing than the body of the pipe.

2. A pipe according to claim 1 wherein the socket wall has a greater degree of circumferential molecular orientation than the body of the pipe.

3. A pipe according to claim 1 wherein the socket wall has substantially zero axial draw and the body of the pipe has positive axial draw.

4. A pipe according to claim 3 wherein the socket wall has circumferential orientation and the body has biaxial orientation.

5. A pipe according to claim 1 wherein the socket wall has a positive axial draw and the body of the pipe has a larger axial draw.

6. A pipe according to claim 1 wherein the socket wall has negative axial draw and the body of the pipe has substantially zero or positive axial draw.

7. A pipe according to claim 6 wherein the body of the pipe has positive axial draw

8. A method of forming a pipe according to claim 1, comprising:
(a) heating a plastics feedstock tube to a desired orientation temperature;
(b) forming a socket therein by circumferential drawing of portion of the feedstock tube with a first degree of axial draw ; and
(c) forming the body of the pipe by circumferential drawing of the feedstock tube with a second degree of axial draw,
wherein said first degree of axial draw is less than said second degree of axial draw.

9. A method according to claim 8 wherein the feedstock tube has a substantially constant wall thickness throughout its length.

10. A method according to claim 8 wherein the socket is formed prior to forming of the body.

11. A method according to claim 10 wherein the socket is cooled to below the desired orientation temperature to fix the molecular orientation of the socket prior to forming the body.

12. A method according to claim 10 wherein the circumferential drawing of the feedstock tube to form the body of the pipe progresses along the length of the tube.

13. A method according to claim 12 wherein the circumferential drawing progresses toward the socket-remote end of the tube.

14. A method according to claim 13 wherein the portion of the feedstock which becomes the body of the pipe is supported in a sleeve prior to the circumferential drawing.

15. A method according to claim 14 wherein the sleeve is withdrawn ahead of the progression of the circumferential drawing.

16. A method according to claim 15 wherein friction between the sleeve and the feedstock tube causes at least part of the axial draw.

17. A method according to claim 8 wherein substantially zero axial draw is applied to the socket and a positive axial draw is applied to the body.

18. A method according to claim 17 wherein the socket is formed by substantially free-end circumferential drawing.

19. A method according to claim 18 wherein the body is formed by fixed-end circumferential drawing.

20. A method according to claim 18 wherein the body is formed by fixed-end circumferential drawing with additional axial draw.

21. A method according to claim 20 wherein the additional axial draw is applied by gripping the socket-remote end of the feedstock tube and stretching during the circumferential drawing to form the pipe body.

22. A method according to claim 17 wherein the positive axial draw is applied to the tube simultaneously with the circumferential drawing to produce biaxial orientation of the body.

## Patentansprüche

1. Ein peripher oder zweiachsig orientiertes Plastikrohr bestehend aus einem Körper mit einer in einem Ende integrierten Muffe, wobei die Muffe eine Wand mit kleinerem Axialzug, d.h. die längenausdehnung die durch peripheres Ziehen bei nicht eingespanntem Ende erreicht werden würde, aufweist als der Rohrkörper.

2. Ein Rohr nach Anspruch 1, dadurch gekennzeichnet, daß die Muffenwand einen größeren Grad peripherer Molekularorientierung aufweist als der Rohrkörper.

3. Ein Rohr nach Anspruch 1, dadurch gekennzeichnet, daß die Muffenwand im Wesentlichen einen Axialzug von null und der Rohrkörper positiven Axialzug aufweist.

4. Ein Rohr nach Anspruch 3, dadurch gekennzeichnet, daß die Muffenwand periphere Orientierung und der Körper zweiachsige Orientierung aufweist.

5. Ein Rohr nach Anspruch 1, dadurch gekennzeichnet, daß die Muffenwand einen positiven Axialzug und der Rohrkörper einen größeren Axialzug aufweist.

6. Ein Rohr nach Anspruch 1, dadurch gekennzeichnet, daß die Muffenwand einen negativen Axialzug und der Rohrkörper im Wesentlichen null Axialzug oder einen positiven Axialzug aufweist.

7. Ein Rohr nach Anspruch 6, dadurch gekennzeichnet, daß der Rohrkörper einen positiven Axialzug aufweist.

8. Ein Verfahren zum Formen eines Rohres nach Anspruch 1, bestehend aus:
(a) Erwärmung eines rohrförmigen Plastik-Einsatzmateriales auf eine erwünschte Orientierungstemperatur.
(b) Formen einer Muffe durch peripheres Ziehen eines Teiles des rohrförmigen Einsatzmateriales mit einem axialen Zug ersten Grades; und
(c) Formen des Rohrkörpers durch peripheres Ziehen des rohrförmigen Einsatzmaterials mit einem axialen Zug zweiten Grades,
wobie der genannte axiale Zug ersten Grades geringer ist als der genannte axiale Zug zweiten Grades.

9. Ein Verfahren nach Anspruch 8, dadurch gekennzeichnet, daß das rohrförmige Einsatzmaterial eine im Wesentlichen gleichbleibende Wanddicke über dessen gesamter Länge aufweist.

10. Ein Verfahren nach Anspruch 8, dadurch gekennzeichnet, daß die Muffe vor dem Körper geformt wird.

11. Ein Verfahren nach Anspruch 10, dadurch gekennzeichnet, daß die Muffe unter die erwünschte Orientierungstemperatur abgekühlt wird um die molekulare Orientierung der Muffe vor der Formung des Körpers zu fixieren.

12. Ein Verfahren nach Anspruch 10, dadurch gekennzeichnet, daß das periphere Ziehen des rohrförmigen Einsatzmaterials zum Formen des Rohrkörpers über die Länge des Rohres voranschreitet.

13. Ein Verfahren nach Anspruch 12, dadurch gekennzeichnet, daß das periphere Ziehen in Richtung dem der Muffe gegenüberliegenden Ende des Rohres voranschreitet.

14. Ein Verfahren nach Anspruch 13, dadurch gekennzeichnet, daß derjenige Abschnitt des Einsatzmaterials der zum Rohrkörper geformt wird, vor dem peripheren Ziehen in einer Buchse unterstützt wird.

15. Ein Verfahren nach Anspruch 14, dadurch gekennzeichnet, daß die Buchse vor dem voranschreirenden peripheren Ziehen zurückgezogen wird.

16. Ein Verfahren nach Anspruch 15, dadurch gekennzeichnet, daß die Reibung zwischen Buchse und dem rohrförmigen Einsatzmaterial zumindest einen teilweisen Axialzug hervorruft.

17. Ein Verfahren nach Anspruch 8, dadurch gekennzeichnet, daß im Wesentlichen ein Axialzug von null an der Muffe und ein positiver Axialzug am Körper angewandt wird.

18. Ein Verfahren nach Anspruch 17, dadurch gekennzeichnet, daß die Muffe im Wesentlichen durch peripheres Ziehen bei nicht eingespannten Enden geformt wird.

19. Ein Verfahren nach Anspruch 18, dadurch gekennzeichnet, daß der Körper durch peripheres Ziehen bei eingespannten Enden geformt wird.

20. Ein Verfahren nach Anspruch 18, dadurch gekennzeichnet, daß der Körper durch peripheres Ziehen bei eingespannten Enden mit zusätzlichem Axialzug geformt wird.

21. Ein Verfahren nach Anspruch 20, dadurch gekennzeichnet, daß der zusätzliche Axialzug durch einspannen des der Muffe gegenüberliegenden Endes des rohrförmigen Einsatzmateriales und Dehnen während des peripheren Ziehens angewandt wird um den Rohrkörper zu formen.

22. Ein Verfahren nach Anspruch 17, dadurch gekennzeichnet, daß der positive Axialzug ain Rohr gleichzeitig mit dem peripheren Ziehen angewandt wird um eine zweiachsige Orientierung des Körpers zu erzielen.

## Revendications

1. Un tuyau en plastique étiré circonférentiellement ou d'une manière biaxiale comprenant un corps avec un manchon faisant partie intégrante de ce corps à l'un de ses bouts, ce manchon ayant une paroi dont l'élongation axiale, c'est-à-dire l'élongation relative à la longueur qui serait obtenue par un étirage circonférentiel des bouts reposant librement, est plus faible que celle du corps de ce tuyau.

2. Un tuyau selon la revendication 1 dans lequel la paroi du manchon a un degré d'orientation moléculaire circonférentielle plus grand que le corps de ce tuyau.

3. Un tuyau selon la revendication 1 dans lequel la paroi du manchon a une élongation axiale en grande partie nulle et le corps de ce tuyau a une élongation axiale positive.

4. Un tuyau selon la revendication 3 dans lequel la paroi du manchon a une orientation circonférentielle et le corps a une orientation biaxiale.

5. Un tuyau selon la revendication 1 dans lequel la paroi du manchon a une élongation axiale positive et le corps de ce tuyau a une élongation axiale plus grande.

6. Un tuyau selon la revendication 1 dans lequel la paroi du manchon a une élongation axiale négative et le corps de ce tuyau a une élongation en grande partie nulle ou positive.

7. Un tuyau selon la revendication 6 dans lequel le corps de ce tuyau a une élongation axiale positive.

8. Une méthode pour former un tuyau selon la revendication 1, comprenant:
(a) le chauffage d'un tube de matière brute en plastique à une température d'orientation désirée;
(b) le formage d'un manchon en cela par l'étirage circonférentiel d'une partie du tube de matière brute avec un premier degré d'élongation axiale; et
(c) le formage du corps de ce tuyau par l'étirage circonférentiel du tube de matière brute à l'aide d'un deuxième degré d'élongation axiale.
dans lequel le susdit premier degré d'élongation axiale est plus faible que le susdit deuxième degré d'élongation axiale.

9. Une méthode selon la revendication 8 dans laquelle le tube de matière brute a une épaisseur de paroi en grande partie constante sur toute sa longueur.

10. Une méthode selon la revendication 8 dans laquelle le manchon est formé avant le formage du corps.

11. Une méthode selon la revendication 10 dans laquelle le manchon est refroidi au dessous de la température d'orientation désirée de manière à fixer l'orientation moléculaire du manchon avant le formage du corps.

12. Une méthode selon la revendication 10 dans laquelle l'étirage circonférentiel du tube de matière brute pour former le corps de ce tuyau progresse suivant la longueur de ce tube.

13. Une méthode selon la revendication 12 dans laquelle cet étirage circonférentiel progresse vers l'extrémité du tube la plus éloignée du manchon.

14. Une méthode selon la revendication 13 dans laquelle la partie du tube de matière brute que devient le corps de ce tuyau est supportée dans un manchon avant l'étirage circonférentiel.

15. Une méthode selon la revendication 14 dans laquelle le manchon est retiré avant la progression de cet étirage circonférentiel.

16. Une méthode selon la revendication 15 dans laquelle le frottement entre le manchon et le tube de matière brute est responsable au moins d'une partie de cette élongation axiale.

17. Une méthode selon la revendication 8 dans laquelle une élongation axiale en grande partie nulle est appliquée au manchon et une élongation axial positive est appliquée au corps.

18. Une méthode selon la revendication 17 dans laquelle le manchon est formé par un étirage circonférentiel les bouts reposant en grande partie librement.

19. Une méthode selon la revendication 18 dans laquelle le corps est formé par un étirage circonférentiel les bouts étant fixes.

20. Une méthode selon la revendication 18 dans laquelle le corps est formé par un étirage circonférentiel les bouts étant fixes avec une élongation axiale supplémentaire.

21. Une méthode selon la revendication 20 dans laquelle cette élongation axiale supplémentaire est appliquée en serrant l'extrémité du tube de matière brute la plus éloignée du manchon et en l'étirant durant l'étirage circonférentiel pour former le corps de ce tuyau.

22. Une méthode selon la revendication 17 dans laquelle cette élongation axiale positive est appliquée au tube en même temps que l'étirage circonférentiel pour produire l'orientation biaxiale du corps.
